(19) Europäisches Patentamt

European Patent Office

Office européen des brevets

(11) **EP 1 482 197 A1**

(12) ## DEMANDE DE BREVET EUROPEEN

(43) Date de publication:
**01.12.2004 Bulletin 2004/49**

(51) Int Cl.⁷: **F16D 48/06**

(21) Numéro de dépôt: **04300298.9**

(22) Date de dépôt: **24.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **26.05.2003 FR 0306328**

(71) Demandeur: **Renault s.a.s.**
**92100 Boulogne Billancourt (FR)**

(72) Inventeur: **La désignation de l'inventeur n'a pas encore été déposée**

(54) ## Procédé de détection d'usure d'un embrayage piloté

(57)  L'invention concerne un procédé de détection de l'usure de la garniture de friction d'un embrayage piloté électroniquement par un calculateur de transmission automatisée, caractérisé en ce qu'il calcule le degré d'usure de l'embrayage à partir de la comparaison entre la mesure initiale à l'état neuf ($P_{efi}$) et la mesure courante de la position fermée ($P_{efc}$) de l'embrayage, puis il confirme ce degré d'usure calculé par détermination du couple transmissible par l'embrayage dans des conditions de roulage définies.

Application aux véhicules automobiles.

FIG_2

EP 1 482 197 A1

**Description**

La présente invention concerne un procédé de détection de l'usure d'un embrayage piloté, et plus particulièrement du degré d'usure de la garniture de friction d'un embrayage piloté électroniquement par un calculateur de transmission automatisée.

Les boîtes de vitesses de véhicule automobile, munies d'un embrayage piloté, présentent des stratégies de pilotage électronique de cet embrayage pouvant tenir compte de plusieurs variables, comme la volonté du conducteur, la pente de la route sur laquelle circule le véhicule. La garniture de friction d'un tel embrayage s'use progressivement au cours de l'utilisation normale du véhicule, mais à partir d'un certain seuil de degré d'usure, la destruction de l'embrayage s'accélère si les stratégies de pilotage n'en tiennent pas compte.

Le véhicule peut alors être immobilisé pour cause de destruction d'embrayage sans que le conducteur du véhicule ne soit alerté à temps du problème.

Une solution actuelle, décrite dans la demande de brevet français, publiée sous le No. 2 807 483 au nom de LUK LAMELLEN , propose un procédé de mesure de l'usure des garnitures d'embrayage basé sur l'apport d'énergie et/ou une évaluation statistique de paramètres de certaines courbes caractéristiques. D'une part, l'apport d'énergie est décrit comme une fonction de la vitesse de glissement de l'embrayage et/ou du couple de friction de l'embrayage et/ou d'un coefficient d'usure, dépendant de la température. D'autre part, l'évaluation statistique de paramètres se rapporte à des courbes caractéristiques qui concernent le point d'activation de l'embrayage et/ou le couple de friction maximum et/ou la force d'actionnement de cet embrayage.

Il ne s'agit nullement d'une méthode précise de calcul de l'usure, dont la notion reste trop générale.

Le but de la présente invention est de pallier ces inconvénients en proposant de calculer le degré d'usure de la garniture de friction d'un embrayage par la mesure de la position fermée de l'actionneur d'embrayage, ce degré d'usure étant ensuite confirmé par une stratégie transparente pour le conducteur du véhicule.

Pour cela, l'objet de l'invention est un procédé de détection de l'usure de la garniture de friction d'un embrayage piloté électroniquement par un calculateur de transmission automatisée, caractérisé en ce qu'il calcule le degré d'usure de l'embrayage à partir de la comparaison entre la mesure initiale à l'état neuf et la mesure courante de la position fermée de l'embrayage, puis il confirme ce degré d'usure calculé par détermination du couple transmissible par l'embrayage dans des conditions de roulage définies.

Selon une caractéristique de ce procédé, il comporte :

- une première phase de calcul du degré d'usure de l'embrayage comprenant les étapes suivantes :

    - mesure et mémorisation de la position fermée initiale $P_{efi}$ de l'embrayage, à l'état neuf, dans des conditions de roulage reproductibles ;
    - mesure, avec une période de récurrence de N passages de vitesses, de la position $P_{efc}$ de l'embrayage quand il est fermé dans des conditions de roulage identiques à celles décrites pour la mesure initiale $P_{efi}$ à l'état neuf, puis comparaison avec celle-ci mémorisée ;
    - calcul du degré d'usure de l'embrayage, défini par un pourcentage X de la réserve d'usure RU et comparaison à un seuil déterminé ;

- une seconde phase de confirmation de ce degré d'usure calculé comportant les étapes suivantes :

    - vérification de la mise du véhicule en conditions d'activation déterminées de ladite phase, en roulage ;
    - ouverture progressive de l'embrayage jusqu'à une position $P_{conf}$ telle que le couple transmissible par l'embrayage $C_{emb}(P_{conf})$ dans cette position $P_{conf}$ est égal au couple moteur $C_{mot}$ auquel on ajoute un offset $C_{sec}$ ou coefficient de sécurité, paramétrable pour prendre en compte les dispersions d'embrayage et celles des mesures :

$$C_{emb} (P_{conf}) = C_{mot} + C_{sec}$$

    - mesure des variations temporelles du régime moteur et du régime primaire de la boîte de vitesses pendant l'ouverture de l'embrayage ;
    - détection d'une usure réelle de l'embrayage dans le cas où le régime moteur croît rapidement ;
    - modification des stratégies de pilotage de l'embrayage de façon à limiter l'énergie dissipée par l'embrayage.

Selon une autre caractéristique du procédé de détection de l'usure, lors de la phase de confirmation du degré d'usure calculé de l'embrayage, dans le cas où le régime moteur croît rapidement alors que les conditions d'activation de la deuxième phase sont toujours vérifiées, le procédé détectant une usure réelle de l'embrayage comporte une étape supplémentaire de modification des stratégies de pilotage de l'embrayage, de façon à limiter l'énergie dissipée par l'embrayage.

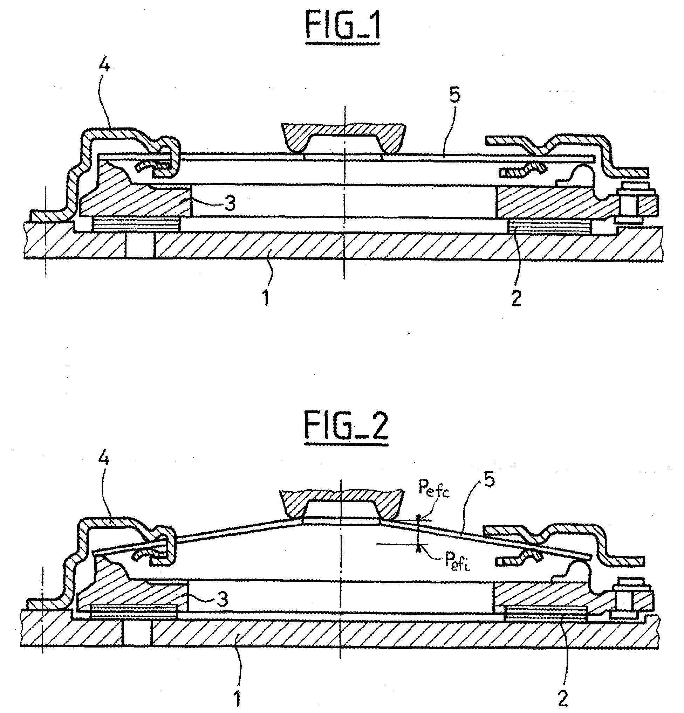

D'autres caractéristiques et avantages de l'invention apparaîtront à la lecture de la description du procédé de détection d'usure d'un embrayage piloté, illustrée par les figures 1 et 2 suivantes qui représentent une coupe schématique transversale d'un embrayage, respectivement neuf et usé.

Les actionneurs d'embrayage peuvent actuellement être de différents types, en particulier :

- de type électro-hydraulique avec une fourchette, c'est-à-dire comportant une électrovanne proportionnelle en débit, un vérin d'embrayage et une liaison à la butée d'embrayage par un câble mécanique actionnant un bras de levier mécanique. Dans ce cas, une mesure de la position de l'actionneur d'embrayage est Idéalement réalisée sur le vérin d'embrayage ;
- de type électro-hydraulique avec un vérin esclave (CSC), c'est-à-dire comportant une électrovanne proportionnelle en débit, avec ou sans vérin émetteur, une liaison hydraulique et un vérin esclave. Une mesure de position de l'actionneur est idéalement réalisée sur le vérin émetteur ou bien sur le vérin esclave ;
- de type électro-mécanico-hydraulique, comportant un moteur électrique, un transformateur de mouvement, un vérin émetteur, une liaison hydraulique et un vérin esclave. C'est sur le vérin esclave que serait réalisée une mesure de position ;
- de type électrique, c'est-à-dire un moteur électrique qui agit sur la butée d'embrayage au moyen d'un système de démultiplication approprié.

Dans tous les cas, les embrayages peuvent ou non comporter un système de rattrapage d'usure.

Le procédé de détection de l'usure d'un embrayage piloté est basé sur la mesure de la position fermée de l'actionneur de l'embrayage, c'est-à-dire quand il transmet du couple. Comme le montre la figure 1, un embrayage est constitué d'un volant moteur 1, d'un ou plusieurs disques de friction équipés de garniture 2, d'un mécanisme, composé d'un plateau 3, d'un couvercle 4 et d'un diaphragme 5 qui exerce un effort sur les disques de friction en prenant appui sur le volant, de manière à transmettre un couple variable.

Ce procédé comporte une première phase de mesure du degré d'usure, qui comprend une première étape de mesure de la position fermée initiale $P_{efi}$ de l'embrayage, à l'état neuf, dans des conditions de roulage reproductibles. En effet, cette mesure est effectuée en roulage, avec une température d'eau du moteur, une température ambiante et une température de boite de vitesses déterminées dans une plage de tolérance fixée, après un nombre entier P de passages de vitesses avant mesure, défini dans une certaine plage de tolérance, avec un cumul d'énergie dissipée avant mesure et un nombre de décollages du véhicule, ou avancées le faisant passer d'une vitesse nulle à une vitesse non nulle, avant mesure définis également dans une certaine plage de tolérance. Il est important de différencier les manoeuvres d'avancée du véhicule des passages de vitesses qui occasionnent moins d'usure que le patinage de l'embrayage lorsque le véhicule commence à rouler.

En effet, pour mémoriser cette position de l'actionneur fermé en début de procédé, il faut éviter que des effets thermiques entachent la validité de la position mesurée, car lorsque l'embrayage s'échauffe, la garniture de friction gonfle, le mécanisme se déforme et la position de l'embrayage fermé est alors modifiée.

Une deuxième étape consiste à mesurer, avec une période de récurrence de N passages de vitesses, N étant un nombre entier, la position $P_{efc}$ de l'embrayage quand il est fermé dans des conditions de mesure identiques à celles décrites pour la mesure initiale $P_{efi}$ à l'état neuf, puis à la comparer à celle-ci mémorisée. L'usure résultera de la différence entre la position courante et la position initiale.

Une troisième étape consiste à calculer le degré d'usure de l'embrayage et à le comparer à un seuil. Le degré d'usure est défini par un pourcentage X de la réserve d'usure RU, qui est une valeur de l'épaisseur de la garniture admissible par le mécanisme. Si la différence entre la position courante $P_{efc}$ et la position initiale $P_{efi}$, mesurée aux deux premières étapes, est supérieure à une valeur correspondant au produit du pourcentage X de la réserve d'usure RU par une fonction de la démultiplication du diaphragme $D_d$ , de l'affaissement thermique $A_t$ du mécanisme, de l'usure des paliers de vilebrequin $U_v$ et de l'usure des becs du diaphragme $U_d$ , ainsi que de l'usure au point d'articulation entre le diaphragme et le couvercle $U_c$, de l'usure de l'appui du plateau sur le diaphragme $U_p$ et de l'usure de la fonte du plateau d'appui de l'embrayage $U_f$ , on considère que le seuil d'usure est atteint :

$$\left| P_{efc} - P_{efi} \right| \geq X\!/\!100 * RU * f\left( D_d, A_t, U_v, U_d, U_c, U_p, U_f \right)$$

Toutes les variables précédemment mentionnées ont une valeur maximale définissable.

Après cette première phase de mesure du degré d'usure, le procédé comporte une seconde phase de confirmation de ce degré d'usure calculé, par détermination du couple transmissible par l'embrayage selon des conditions d'activation déterminées.

Les conditions d'activation concernant le véhicule sont les suivantes :

- le degré d'usure calculé à la phase précédente est au moins égal à un seuil prédéfini ;
- le régime du moteur $\omega_{mot}$ est stable pendant une durée paramétrable lors de la mise au point du moteur ;
- le couple développé par le moteur thermique du véhicule $C_{mot}$ est stable pendant une durée paramétrable et supérieur à un seuil au-delà duquel l'estimation du couple moteur comporte un minimum d'erreurs ;
- un rapport de vitesse est engagé ;
- il n'y a pas de changement de rapport en cours ;
- l'embrayage est fermé.

La phase de confirmation du degré d'usure comporte donc une première étape de vérification des conditions d'activation, puis d'une deuxième étape d'ouverture progressive de l'embrayage jusqu'à une position $P_{conf}$ définie par l'équation suivante qui traduit le fait que le couple transmissible par l'embrayage $C_{emb}$ ($P_{conf}$), quand l'embrayage est en position $P_{cont}$, est égal au couple moteur $C_{mot}$, auquel on ajoute un offset $C_{sec}$ ou coefficient de sécurité, paramétrable pour prendre en compte les dispersions d'embrayage et celles des mesures. La détermination du couple transmis par l'embrayage tient compte des effets de la température sur l'embrayage grâce à un modèle thermique d'embrayage, par exemple. Ainsi :

$$C_{emb} (P_{conf}) = C_{mot} + C_{sec}$$

sachant de plus que le couple moteur et le couple transmis par l'embrayage sont reliés par l'équation de la dynamique suivante :

$$C_{mot} - C_{emb} = J_{mot} * \frac{d\omega_{mot}}{dt}$$

dans laquelle $J_{mot}$ est le moment d'inertie du moteur thermique et $d\omega_{mot}/dt$ est la dérivée du régime moteur.

Une troisième étape consiste à observer les variations temporelles du régime moteur et du régime primaire de la boîte de vitesses.

Dans le cas où le régime moteur croît rapidement, c'est-à-dire quand la dérivée du régime dépasse un seuil défini, alors que les conditions d'activation de la deuxième phase sont toujours vérifiées, le procédé considère que l'embrayage est effectivement usé car le régime moteur ne peut augmenter brutalement que si le couple moteur est supérieur au couple transmis par l'embrayage, selon l'équation de la dynamique.

Dans le cas où cette usure atteint un pourcentage défini de la réserve d'usure, lors d'une quatrième étape, les stratégies de pilotage de l'embrayage peuvent être modifiées de façon à limiter l'énergie dissipée par l'embrayage. Un avertissement, par un message sonore, un voyant ou autre, peut prévenir le conducteur du véhicule de l'usure de l'embrayage et de la nécessité de prévoir son remplacement.

Par contre, dans le cas où aucune envolée de régime moteur n'apparaît, le procédé en déduit que l'usure réelle est inférieure à l'usure calculée dans la première phase et aucune action de prévention n'est déclenchée.

Tous les N passages de vitesses, le calculateur électronique relance les deux phases du procédé et lorsque le degré d'usure calculé dans la première phase est confirmé dans la deuxième phase, les stratégies de pilotage de l'embrayage sont alors modifiées pour limiter l'énergie dissipée par l'embrayage.

Le procédé qui consiste à calculer le degré d'usure de la garniture de friction d'un embrayage en utilisant la mesure de position de l'actionneur d'embrayage et à confirmer ce degré d'usure est transparent pour le conducteur du véhicule. Cette mesure de l'usure permet d'adapter les stratégies de pilotage de l'embrayage et de conseiller le conducteur, en particulier par un témoin d'usure, d'assurer la maintenance préventive de la fonction.

**Revendications**

1. Procédé de détection de l'usure de la garniture de friction d'un embrayage piloté électroniquement par un calculateur de transmission automatisée, **caractérisé en ce qu'**il comporte :

- une première phase de calcul du degré d'usure de l'embrayage comprenant les étapes suivantes :

  - mesure et mémorisation de la position fermée initiale ($P_{efi}$) de l'embrayage, à l'état neuf, dans des conditions de roulage reproductibles ;
  - mesure, avec une période de récurrence de N passages de vitesses, de la position ($P_{efc}$) de l'embrayage quand il est fermé dans des conditions de roulage identiques à celles décrites pour la mesure initiale ($P_{efi}$) à l'état neuf, puis comparaison avec celle-ci mémorisée ;
  - calcul du degré d'usure de l'embrayage, défini par un pourcentage (X) de la réserve d'usure (RU) et comparaison à un seuil déterminé ;

- une seconde phase de confirmation de ce degré d'usure calculé comportant les étapes suivantes :

  - vérification de la mise du véhicule en conditions d'activation déterminées de ladite phase, en roulage ;
  - ouverture progressive de l'embrayage jusqu'à une position ($P_{conf}$) telle que le couple transmissible par l'embrayage $[C_{emb}(P_{conf})]$ dans cette position ($P_{conf}$) est égal au couple moteur ($C_{mot}$) auquel on ajoute un offset ($C_{sec}$) ou coefficient de sécurité, paramétrable pour prendre en compte les dispersions d'embrayage et celles des mesures :

$$C_{emb}\ (P_{conf}) = C_{mot} + C_{sec}$$

  - mesure des variations temporelles du régime moteur et du régime primaire de la boîte de vitesses pendant l'ouverture de l'embrayage ;
  - détection d'une usure réelle de l'embrayage dans le cas où le régime moteur croît rapidement.

2. Procédé de détection de l'usure selon la revendication 1, **caractérisé en ce que** le seuil d'usure de l'embrayage est défini par une valeur correspondant au produit du pourcentage (X) de la réserve d'usure (RU) par une fonction de la démultiplication du diaphragme ($D_d$), de l'affaissement thermique ($A_t$) du mécanisme, de l'usure des paliers de vilebrequin ($U_v$) et de l'usure des becs du diaphragme ($U_d$), ainsi que de l'usure au point d'articulation entre le diaphragme et le couvercle ($U_c$), de l'usure de l'appui du plateau sur le diaphragme ($U_p$) et de l'usure de la fonte du plateau d'appui de l'embrayage ($U_f$), selon la formule :

$$\left| P_{efc} - P_{efi} \right| \geq \frac{X}{100} * RU * f\left( D_d, A_t, U_v, U_d, U_c, U_p, U_f \right)$$

3. Procédé de détection de l'usure selon la revendication 1, **caractérisé en ce que** les conditions de roulage reproductibles, dans lesquelles est effectuée la mesure de la position fermée initiale ($P_{efi}$) de l'embrayage, à l'état neuf, en roulage, concernent une température d'eau du moteur, une température ambiante et une température de boite de vitesses déterminées dans une plage de tolérance fixée, après un nombre (P) de passages de vitesses avant mesure défini dans une certaine plage de tolérance, avec un cumul d'énergie dissipée avant mesure et un nombre de décollages, ou avancées, du véhicule, avant mesure définis également dans une certaine plage de tolérance.

4. Procédé de détection de l'usure selon la revendication 1, **caractérisé en ce que** les conditions d'activation de la phase de confirmation du degré d'usure sont les suivantes :

  - le degré d'usure calculé à la phase précédente est au moins égal à un seuil prédéfini ;
  - le régime du moteur ($\omega_{mot}$) est stable pendant une durée paramétrable ;
  - le couple ($C_{mot}$) développé par le moteur thermique du véhicule est stable pendant une durée paramétrable et supérieur à un seuil au-delà duquel l'estimation du couple comporte un minimum d'erreurs ;
  - un rapport de vitesse est engagé ;
  - aucun changement de rapport n'est en cours ;
  - l'embrayage est fermé.

5. Procédé de détection de l'usure selon la revendication 1, **caractérisé en ce que**, lors de la phase de confirmation du degré d'usure calculé de l'embrayage, dans le cas où le régime moteur croît rapidement alors que les conditions d'activation de la deuxième phase sont toujours vérifiées, le procédé détectant une usure réelle de l'embrayage comporte une étape supplémentaire de modification des stratégies de pilotage de l'embrayage, de façon à limiter l'énergie dissipée par l'embrayage.

6. Procédé de détection de l'usure selon la revendication 4, **caractérisé en ce que**, lors de la phase de confirmation du degré d'usure calculé de l'embrayage, dans le cas où le procédé détecte une usure réelle de l'embrayage, il comporte une étape supplémentaire d'avertissement, par un message sonore, un voyant ou autre, du conducteur du véhicule de l'usure de l'embrayage et de la nécessité de prévoir son remplacement.

7. Procédé de détection de l'usure selon la revendication 4, **caractérisé en ce que**, lors de la phase de confirmation du degré d'usure calculé de l'embrayage, dans le cas où aucune envolée de régime moteur n'apparaît, il en déduit que l'usure réelle est inférieure à l'usure calculée dans la première phase et aucune action de prévention n'est déclenchée.

8. Procédé de détection de l'usure selon l'une des revendications 1 à 6, **caractérisé en ce qu'**il réitère les deux phases avec une fréquence de récurrence de N passages de vitesses, et lorsque le degré d'usure calculé dans la première phase est confirmé dans la deuxième phase, les stratégies de pilotage de l'embrayage sont alors modifiées pour limiter l'énergie dissipée par l'embrayage.

## FIG_1

## FIG_2

**Office européen des brevets**

**RAPPORT DE RECHERCHE EUROPEENNE**

Numéro de la demande

EP 04 30 0298

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 593 287 A (SACHS SYSTEMTECHNIK GMBH) 24 juillet 1987 (1987-07-24) <br> * page 1, ligne 36 - page 2, ligne 1 * <br> * page 3, ligne 28 - ligne 30 * <br> * page 4, ligne 19 - ligne 25 * <br> * page 5, ligne 3 - ligne 16 * <br> * page 7, ligne 10 - ligne 12; revendications 1,3,5 * <br> ----- | 1-3,5,6, 8 | F16D48/06 |
| A | GB 2 372 330 B (ZF SACHS AG) 21 août 2002 (2002-08-21) <br> * page 1, alinéa 2 * <br> * page 3, alinéas 3,4 * <br> * revendications 1-3 * <br> ----- | 1-8 | |
| A | US 5 337 866 A (STUERMER WINFRIED ET AL) 16 août 1994 (1994-08-16) <br> * colonne 8, ligne 12 - ligne 13 * <br> * colonne 8, ligne 18 - ligne 20 * <br> * colonne 10, ligne 36 - ligne 37 * <br> * colonne 10, ligne 50 - ligne 51; revendication 1 * <br> ----- | 1,6,8 | |
| A | US 6 040 768 A (DREXL HANS-JUERGEN) 21 mars 2000 (2000-03-21) <br> * colonne 1, ligne 11 - ligne 22 * <br> * colonne 2, ligne 23,41-43 * <br> * colonne 3, ligne 37,41-48 * <br> * colonne 4, ligne 35 * <br> * colonne 6, ligne 38 * <br> ----- | 1,6-8 | |
| A | US 4 646 891 A (BRAUN EUGENE R) 3 mars 1987 (1987-03-03) <br> * colonne 3, ligne 15-17,63-66 * <br> * colonne 7, ligne 61 - ligne 65 * <br> ----- | 1,2 | |

DOMAINES TECHNIQUES RECHERCHES (Int.Cl.7)

F16D

*Le présent rapport a été établi pour toutes les revendications*

| Lieu de la recherche | Date d'achèvement de la recherche | Examinateur |
|---|---|---|
| Munich | 27 septembre 2004 | García y Garmendia A |

**EP 1 482 197 A1**

**ANNEXE AU RAPPORT DE RECHERCHE EUROPEENNE
RELATIF A LA DEMANDE DE BREVET EUROPEEN NO.**          EP 04 30 0298

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-09-2004

| Document brevet cité au rapport de recherche | | Date de publication | Membre(s) de la famille de brevet(s) | | Date de publication |
|---|---|---|---|---|---|
| FR 2593287 | A | 24-07-1987 | DE | 3601708 A1 | 23-07-1987 |
| | | | FR | 2593287 A1 | 24-07-1987 |
| GB 2372330 | B | 21-08-2002 | DE | 19810033 A1 | 16-09-1999 |
| | | | BR | 9900040 A | 04-01-2000 |
| | | | ES | 2207990 A1 | 01-06-2004 |
| | | | FR | 2775776 A1 | 10-09-1999 |
| | | | GB | 2372330 A ,B | 21-08-2002 |
| | | | GB | 2335276 A ,B | 15-09-1999 |
| | | | JP | 3065069 B2 | 12-07-2000 |
| | | | JP | 11337326 A | 10-12-1999 |
| | | | SE | 517766 C2 | 16-07-2002 |
| | | | SE | 9900811 A | 10-09-1999 |
| | | | US | 6040768 A | 21-03-2000 |
| US 5337866 | A | 16-08-1994 | DE | 4100091 A1 | 09-07-1992 |
| | | | BR | 9200014 A | 10-11-1992 |
| | | | DE | 59107079 D1 | 25-01-1996 |
| | | | EP | 0493840 A2 | 08-07-1992 |
| | | | JP | 4302717 A | 26-10-1992 |
| US 6040768 | A | 21-03-2000 | DE | 19810033 A1 | 16-09-1999 |
| | | | BR | 9900040 A | 04-01-2000 |
| | | | ES | 2207990 A1 | 01-06-2004 |
| | | | FR | 2775776 A1 | 10-09-1999 |
| | | | GB | 2372330 A ,B | 21-08-2002 |
| | | | GB | 2335276 A ,B | 15-09-1999 |
| | | | JP | 3065069 B2 | 12-07-2000 |
| | | | JP | 11337326 A | 10-12-1999 |
| | | | SE | 517766 C2 | 16-07-2002 |
| | | | SE | 9900811 A | 10-09-1999 |
| US 4646891 | A | 03-03-1987 | CN | 86100250 A | 10-09-1986 |
| | | | GB | 2170571 A | 06-08-1986 |

EPO FORM P0460

Pour tout renseignement concernant cette annexe : voir Journal Officiel de l'Office européen des brevets, No.12/82